# EUROPEAN PATENT SPECIFICATION

(11) **EP 1 966 531 B1**
(45) Date of publication and mention of the grant of the patent: **08.04.2009**
(21) Application number: 06818661.8
(22) Date of filing: 20.11.2006
(51) Int. Cl.: F16M 11/26, F16B 7/14

(54) **AN ADJUSTABLE TELESCOPIC SUPPORT**
VERSTELLBARE TELESKOPSTÜTZE
SUPPORT TELESCOPIQUE REGLABLE

(30) Priority: 28.12.2005 IT PD20050381
(43) Date of publication of application: 10.09.2008
(73) Proprietor: LINO MANFROTTO + CO. S.p.A., 36061 Bassano del Grappa (IT)
(72) Inventor: ZARPELLON, Stelvio, I-36061 Bassano Del Grappa (VI) (IT)
(74) Representative: Susanetto, Carlo
(86) International application number: PCT/EP2006/011094
(87) International publication number: WO 2007/073805

(56) References cited:
- DE-C- 592 023
- FR-A- 2 747 148
- GB-A- 2 078 508
- US-A- 4 277 197
- US-A- 5 011 104
- US-A- 5 492 430
- US-A- 5 575 448

## Description

### Technical field of the invention

The present invention relates to an adjustable telescopic support, particularly but not exclusively for supporting video and photographic equipment, of the type including the features mentioned in the preamble of the main claim.

### Background art

In the construction of supports for photographic equipment, such as monopods or tripods having telescopic legs, it is desired that the legs (and/or the central column of the support) should be telescopically adjustable without offering substantial resistance in the lengthening direction but should be subject to automatic locking, which can be released manually, in the opposite direction, that is to say, that of contraction. In practice, it would be desirable for the operator to be able to position the tripod with minimum force, even with one hand, and for the legs to lock automatically under the load they support. A support according to the preamble of the main claim is disclosed in US 5 492 430.

A support of that type is known, for example, from US 5,575,448 which belongs to the same Applicant.

The support described in that document is provided with a locking device which comprises a beaker-like formation fitted to one of the tubular elements, with a tapered seat in which are engaged two limbs projecting from a contractible collar capable of being clamped on the other tubular element in order to be locked thereon in a loading direction and to be unlocked in the opposite direction.

That device achieves the desired result of automatic locking of the telescopic elements in the loading direction but does have some disadvantages. A first disadvantage is caused by the decidedly large space requirement of the device which, especially in a photographic tripod, is hardly consistent with the requirements of compactness typical of the sector. A second disadvantage is caused by the complicated nature of the system for manually unlocking the device when it is desired to contract the telescopic rod to which it is fitted.

### Disclosure of the invention

The technical problem underlying this invention is that of providing an adjustable telescopic support which is designed structurally and functionally to enable all of the disadvantages discussed with reference to the mentioned prior art to be overcome. In the context of this problem, an important object of the invention is to provide a support, the locking device of which is suitable for being fitted on tubular elements produced from various materials.

Another object of the invention is to provide a support which can be readily operated with one hand.

This problem is solved and these objects are achieved with an adjustable telescopic support according to the invention which is produced in accordance with the claims which follow.

### Brief description of the drawings

The features and advantages of the invention will emerge more clearly from the detailed description of some preferred embodiments thereof which are illustrated by way of non-limiting example with reference to the appended drawings in which:
- Figure 1 is a view in longitudinal section of a first embodiment of a support according to the invention;
- Figure 2 is an exploded perspective view of the support of Figure 1;
- Figure 3 is a sectioned view of a second embodiment of the support of this invention;
- Figure 4 is a sectioned view of a third embodiment of the support of this invention;
- Figure 5 is a sectioned view on an enlarged scale of the detail indicated by the arrow V of Figure 4;
- Figure 6 is a partial sectioned view of a variant of the support of Figure 4;
- Figure 7 is an exploded perspective view of a further embodiment of the invention;
- Figure 8 is a view in axial section of the embodiment of Figure 7;
- Figure 9 is a sectioned view taken on the line IX-IX of Figure 8.

### Best modes for carrying out the invention

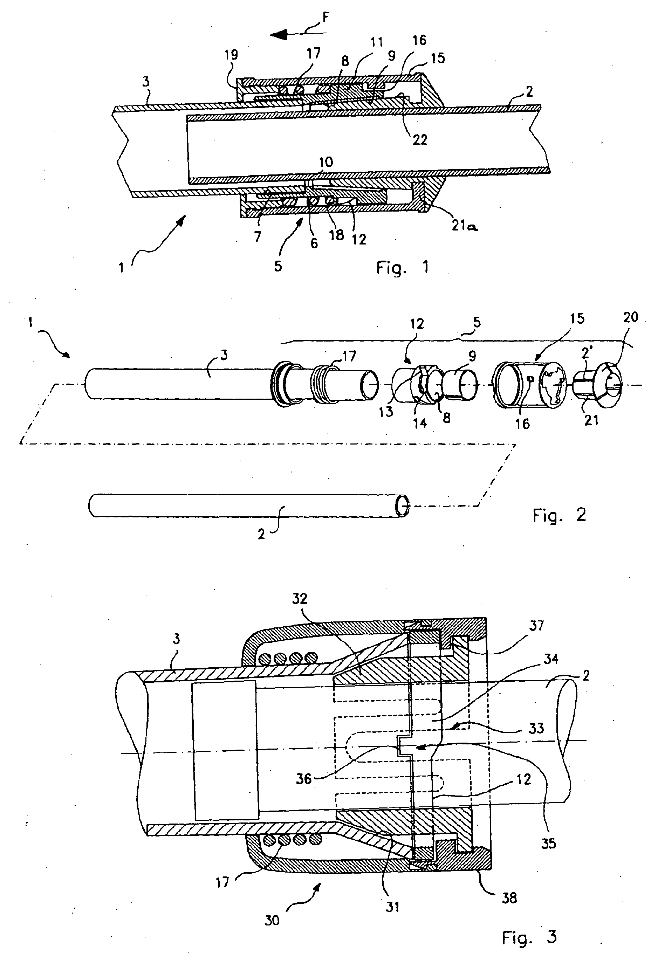

In Figures 1 and 2, 1 indicates generally a portion of a support, such as a portion of a leg of a tripod or monopod for optical, photographic or video-photographic equipment. The support 1 can, however, equally well be used for other purposes.

The support comprises a first and a second tubular element 2, 3 which are internal and external, respectively, and which can be slid telescopically one inside the other.

The tubular elements are guided one inside the other and can be locked in any relative position by means of a locking device 5 fitted between them.

The locking device 5 comprises a first sleeve 6 fitted and locked by a portion 7 thereof on one end of the external tubular element 3 and having, on its inside, a frustoconical seat 8 on which a covering 9 is fitted and held in a suitable recess. A shoulder 10 abutted by the corresponding end of the tubular element 3 is formed between the seat 8 and the portion 7. The seat 8 is thus fitted on the tubular element 3 and may be produced, together with the sleeve 6, with a material which is the same as or different from the material of the tubular element 3.

On its outer surface, the sleeve 6 has an annular enlarged portion 11 on which a series of cam profiles 12 are formed, each having a ramp 13 terminated by a portion 14 which extends circumferentially.

A second sleeve 15 is fitted slidably on the first sleeve 6. The second sleeve 15 has, for each cam profile 12, a cam-follower appendage 16 projecting radially inwards and is acted on by a spring 17 which is active in the direction of arrow F in Figure 1 between a shoulder 18 formed by the enlarged portion 11 and an annular plug 19 fitted on the second sleeve 15.

The second sleeve 15 also has, on the side remote from the plug 19, a collar 20 which is resiliently contractible owing to the provision of notches 21 and which is fitted on the internal tubular element 2 to surround it completely. The collar 20 is secured in abutment against the second sleeve 15 by means of a bayonet coupling 21a. The latter has, on the outside, a frustoconical shell surface 22 which engages in the seat 8 of the first sleeve with the interposition of the covering 9. The covering 9 preferably has a coefficient of friction which is lower, with respect to the surface of the collar 20, than the coefficient of friction between the internal surface of the collar 20 and the external surface of the tubular element 2, so that the collar can be moved with respect to the seat 8 more readily than with respect to the tubular element 2. The covering 9 is fitted on the seat 8 in the form of a frustoconical ring composed of a sheet-form plastics material having a low coefficient of friction.

The second sleeve 15 can be rotated manually with respect to the first sleeve 6 in order to move the cam-follower appendages 16 between the circumferential portion 14, in which the collar is locked with respect to the seat 8 in a non-operative position in which the tubular elements 2, 3 are free to slide with respect to each other, and the ramp 13, in which the collar is urged by the spring 17 into an operative position in the seat 8 in order to lock the tubular elements 2, 3 with respect to each other. The spring 17, the cam profiles 12 and the cam-followers 16 therefore constitute actuator means between the sleeve and the external tubular element in order to move the collar 20, by means of the sleeve, between the operative and non-operative positions identified above. It should be mentioned that, in that position, a load acting in the direction tending to insert the first tubular element 2 more deeply into the second tubular element 3 tends to drive the collar 20 further into the seat 8, increasing the resilient contraction of the collar and the resulting locking force in respect of the tubular elements 2, 3. Conversely, an urging in the opposite direction tends to move the collar 20 axially with respect to the seat 8 in the direction of compression of the spring 17, thus freeing the relative sliding between the tubular elements 2, 3.

Referring now to Figure 3, a second embodiment of the invention is generally indicated 30. Details analogous to those just described are indicated by the same reference numerals.

In this embodiment 30, the seat 31 for accommodating the contractible collar 32 is formed by flaring at the corresponding end of the external tube 3. It will be appreciated that the material of the seat and the material of the tubular element are in that case identical.

The cam profile 12 in this case comprises a front cam 33 formed at the corresponding end of the external tube 3 by fitting an annular element 34 to the mouth of the seat 31. The annular element 34 is locked in rotation on the tubular element 3 by the engagement of a tooth 35 in a corresponding recess 36. One (or more) projection(s) 37 from the second sleeve 38 is (are) provided as (a) cam-follower appendage(s).

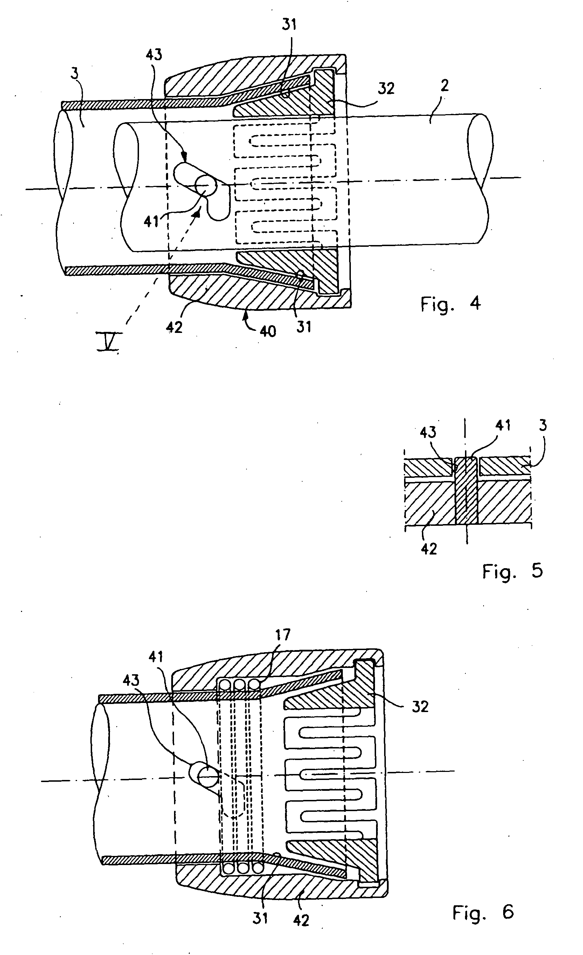

In the embodiment of Figure 4, which is generally indicated 40, the cam-follower appendage is formed by a peg 41 placed radially in the sleeve 42 and projecting inside the same in such a manner as to engage a cam profile 43 formed by producing a slot in the external tube 3. The sleeve 42 may (Figure 6) or may not (Figure 5) be provided with a spring 17 so that the cam and the cam-follower can, if necessary, be the only means actuating the locking device. In this case too, as in the remaining embodiments, details analogous to those of the previous Figures are marked by the same reference numerals.

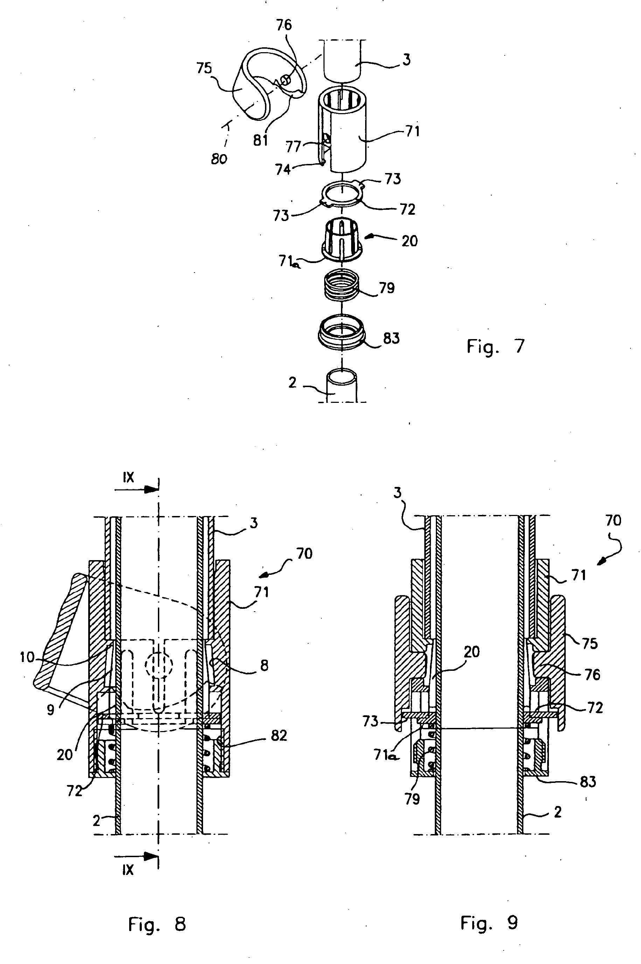

With reference to Figures 7 to 9, a further embodiment of the invention is generally indicated 70.

A sleeve 71 is fitted and secured to the external tubular element 3 in a manner completely analogous to the sleeve 6 of the first embodiment. Like the latter, the sleeve 71 has the seat 8, complete with the covering 9, and also the shoulder 10. Also completely the same except for structural details is the collar 20 which is terminated by a flange 71a abutted by a collar-carrying member in the form of an annular element 72 having two diametric appendages 73 projecting radially outwards and acting as cam-followers. The appendages 73 are accommodated in respective opposite openings 74 formed longitudinally in the sleeve 71. A tilting element 75 is pivoted about a transverse axis 80 by means of respective pins 76 in corresponding seats 77 formed in the sleeve 71 at the base of the openings 74. The collar is moved in the seat 8 against the force of a spring 79 by means of cam profiles 81 with which the cam-follower appendages 73 cooperate and which are formed on the element tilting about the pivot axis 80. The spring 79 tends to place the collar 20 in the seat 8 in an operative position of locking the tubular elements and it is held in a recess 82 of the sleeve 71 by means of a screw plug 83.

By tilting the element 75 about the axis 80, either the tubular elements are released, in order to adjust the relative extension thereof, when the cam profiles 81 act on the cam-follower appendages 73 in order to disengage the collar from the seat 8, or they are locked, when the cam profiles 81 allow the spring 79 to place the collar in the seat 8.

The invention thus solves the problem set and achieves numerous advantages over traditional supports. These include the compactness of the locking device between the tubular elements and the locking efficiency which is proportional to the load acting on the support. Another important advantage is the fact of being able to adapt the invention to supports whose telescopic tubular elements are constructed with various materials, which may or may not be suitable for undergoing flaring machining.

## Claims

1. An adjustable telescopic support (1) comprising:
- at least two tubular elements (2, 3) which are slidable telescopically one inside the other and which are internal and external, respectively, and, between those elements,
- a device (5) for locking the elements in an adjustable position which includes a seat (8) at one end of the external tubular element (3), a contractible collar (20) which is mounted in the seat, surrounds the internal tubular element (2) and is axially mobile in the seat between an operative position in which the collar is clamped on the internal tubular element and placed in the seat, locking the tubular elements axially relative to each other, and a non-operative position in which the tubular elements are telescopically slidable with respect to each other,
- clamping means between the collar and the seat for contracting the collar as a function of a movement thereof in the seat, the clamping means including respective tapered profiles (22) on the collar and/or on the seat which are such as to contract the collar in order to lock the tubular elements with respect to each other by the effect of an axial movement of the collar into the operative position in the seat,
- actuator means active between the collar (20), by the interposition of a collar-carrying member (15) on which the collar is mounted, and the external tubular element in order to move the collar axially in the seat between the operative and non-operative positions, the actuator means comprising a spring (17) which is active between the collar and the external tubular element in order to urge the collar towards the operative position of placement in the seat,
**characterized in that** the actuator means comprise a cam profile (12) between the collar-carrying member (15) and the external tubular element capable of moving the collar axially with respect to the seat between the operative and non-operative positions.

2. An adjustable telescopic support according to claim 1, wherein the cam profile (12) comprises a circumferential cam formed on one of the collar-carrying member and the external tubular element, and a cam-follower (16) formed on the other of the collar-carrying member and the external tubular element, the cam profile and the cam-follower being coupled to each other.

3. An adjustable telescopic support according to claims 1 or 2, wherein the seat (8) is formed by flaring the corresponding end (31) of the external tubular element.

4. An adjustable telescopic support according to claims 1 or 2, wherein the seat (8) is provided on a first sleeve (6) fitted on the external tubular element.

5. An adjustable telescopic support according to one or more of the preceding claims, wherein the collar-carrying member is in the form of a second sleeve (15) surrounding the outside of the external tubular element.

6. An adjustable telescopic support according to claim 5, wherein the spring (17) is fitted on the external tubular element, between the latter and the second sleeve (15).

7. An adjustable telescopic support according to one or more of the preceding claims, wherein the cam profile (12) comprises a front cam (33) formed at the corresponding end of the external tubular element.

8. An adjustable telescopic support according to claim 7, wherein the front cam is formed on an annular element (34) fitted at the corresponding axial end of the external tubular element.

9. An adjustable telescopic support according to claim 8, wherein anti-rotation means (35, 36) are provided between the external tubular element and the annular element fitted thereon.

10. An adjustable telescopic support according to one or more of the preceding claims, wherein the interface surface between the seat and the collar has a coefficient of friction which is lower than that of the interface surface between the collar and the internal tubular element.

11. An adjustable telescopic support according to claim 1, wherein the cam profile is associated with a tilting element (75) pivoted transversely on the external tubular element about a pivot axis (80), the collar-carrying member (72) comprising at least one cam-follower appendage (73) cooperating with the cam profile (81) in order to move the collar against the force of the spring.

12. An adjustable telescopic support according to claim 11, wherein the tilting element (75) is pivoted in respective pivot seats (77) formed on a sleeve (71) fitted on the external tubular element, an opening (74), through which the cam-follower appendage projects radially outwards, being provided at at least one of the seats, and the cam profile being formed on the element tilting about the pivot axis.

## Patentansprüche

1. Eine verstellbare Teleskopstütze (1), aufweisend:
- mindestens zwei rohrförmige Elemente (2, 3), die teleskopisch ineinander gleitfähig sind und die sich innen bzw. außen und zwischen jenen Elementen befinden,
- eine Vorrichtung (5) zum Arretieren der Elemente in einer verstellbaren Stellung, die einen Sitz (8) an einem Ende des äußeren rohrförmigen Elements (3), einen zusammenziehbaren Kragen (20) aufweist, der im Sitz montiert ist, das innere rohrförmige Element (2) umgibt und im Sitz zwischen einer Betriebsstellung, in welcher der Kragen an das innere rohrförmige Element geklemmt und im Sitz platziert wird, wobei er die rohrförmigen Elemente axial zueinander arretiert, und einer Nichtbetriebsstellung, in der die rohrförmigen Elemente in Bezug zueinander teleskopisch gleitfähig sind, axial beweglich ist,
- eine Klemmvorrichtung zwischen dem Kragen und dem Sitz zum Zusammenziehen des Kragens in Abhängigkeit von seiner Bewegung im Sitz, wobei die Klemmvorrichtung entsprechende, konisch zulaufende Profile (22) auf dem Kragen und/oder auf dem Sitz besitzt dergestalt, dass sie den Kragen zusammenziehen, um durch die Wirkung einer axialen Bewegung des Kragens in die Betriebsstellung im Sitz die rohrförmigen Elemente in Bezug zueinander zu arretieren,
- eine Betätigungsvorrichtung, wirksam zwischen dem Kragen (20), durch die Zwischenschaltung eines den Kragen tragenden Elements (15), auf dem der Kragen montiert ist, und dem äußeren rohrförmigen Element, um den Kragen im Sitz zwischen der Betriebs- und der Nichtbetriebsstellung axial zu bewegen, wobei die Betätigungsvorrichtung eine Feder (17) aufweist, die zwischen dem Kragen und dem äußeren rohrförmigen Element wirksam ist, um den Kragen in Richtung der Betriebsstellung der Platzierung im Sitz zu drängen,
**dadurch gekennzeichnet, dass** die
Betätigungsvorrichtung ein Nockenprofil (12) zwischen dem den Kragen tragenden Element (15) und dem äußeren rohrförmigen Element besitzt, das fähig ist, den Kragen axial in Bezug auf den Sitz zwischen der Betriebs- und der Nichtbetriebsstellung zu bewegen.

2. Verstellbare Teleskopstütze gemäß Anspruch 1, bei der das Nockenprofil (12) einen Umfangsnocken, der einerseits auf dem den Kragen tragenden Element oder dem äußeren rohrförmigen Element gebildet wird, und ein Schleppstück (16), das andererseits auf dem den Kragen tragenden Element oder dem äußeren rohrförmigen Element gebildet wird, aufweist, wobei das Nockenprofil und das Schleppstück aneinander gekoppelt sind.

3. Verstellbare Teleskopstütze gemäß Anspruch 1 oder 2, bei welcher der Sitz (8) durch Aufweiten des entsprechenden Endes (31) des äußeren rohrförmigen Elements gebildet wird.

4. Verstellbare Teleskopstütze gemäß Anspruch 1 oder 2, bei welcher der Sitz (8) auf einer auf dem äußeren rohrförmigen Element befestigten ersten Manschette (6) vorgesehen ist.

5. Verstellbare Teleskopstütze gemäß einem oder mehr der vorangegangenen Ansprüche, bei der das den Kragen tragende Element in der Form einer zweiten Manschette (15) gehalten ist, welche die Außenseite des äußeren rohrförmigen Elements umgibt.

6. Verstellbare Teleskopstütze gemäß Anspruch 5, bei der die Feder (17) auf dem äußeren rohrförmigen Element zwischen Letzterem und der zweiten Manschette (15) befestigt ist.

7. Verstellbare Teleskopstütze gemäß einem oder mehr der vorangegangenen Ansprüche, bei der das Nockenprofil (12) einen vorderen Nocken (33) aufweist, der am entsprechenden Ende des äußeren rohrförmigen Elements gebildet wird.

8. Verstellbare Teleskopstütze gemäß Anspruch 7, bei welcher der vordere Nocken auf einem ringförmigen Element (34) gebildet wird, das am entsprechenden axialen Ende des äußeren rohrförmigen Elements befestigt ist.

9. Verstellbare Teleskopstütze gemäß Anspruch 8, bei der Drehschutzvorrichtungen (35, 36) zwischen dem äußeren rohrförmigen Element und dem daran befestigten ringförmigen Element vorgesehen sind.

10. Verstellbare Teleskopstütze gemäß einem oder mehr der vorangegangenen Ansprüche, bei der die Übergangsfläche zwischen dem Sitz und dem Kragen einen Reibungskoeffizienten hat, der niedriger ist als derjenige der Übergangsfläche zwischen dem Kragen und dem inneren rohrförmigen Element.

11. Verstellbare Teleskopstütze gemäß Anspruch 1, bei der das Nockenprofil mit einem Kippelement (75) verbunden ist, das auf dem äußeren rohrförmigen Element quer um eine Schwenkachse (80) geschwenkt wird, wobei das den Kragen tragende Element (72) mindestens einen Schleppstückanhang (73) aufweist, der mit dem Nockenprofil (81) zusammenwirkt, um den Kragen gegen die Kraft der Feder zu bewegen.

12. Verstellbare Teleskopstütze gemäß Anspruch 11, bei der das Kippelement (75) in entsprechenden Schwenksitzen (77) geschwenkt wird, die auf einer auf dem äußeren rohrförmigen Element befestigten Manschette (71) gebildet werden, wobei eine Öffnung (74), durch die der Schleppstückanhang radial nach außen ragt, an mindestens einem der Sitze vorgesehen ist und das Nockenprofil auf dem um die Schwenkachse kippenden Element gebildet wird.

## Revendications

1. Support télescopique réglable (1), comprenant :
- au moins deux éléments tubulaires (2, 3) qui sont capables de coulisser télescopiquement l'un à l'intérieur de l'autre et qui sont respectivement intérieur et extérieur, et, entre ces éléments,
- un dispositif (5) pour bloquer les éléments dans une position réglable, qui inclut un siège (8) à une extrémité de l'élément tubulaire extérieur (3), un collier (40) capable de se contracter, qui est monté dans le siège, qui entoure l'élément tubulaire intérieur (2) et qui est axialement mobile dans le siège entre une position fonctionnelle dans laquelle le collier est inséré sur l'élément tubulaire intérieur et placé dans le siège, en bloquant les éléments tubulaires axialement l'un par rapport à l'autre, et une position non fonctionnelle dans laquelle les éléments tubulaires sont capables de coulisser télescopiquement l'un par rapport à l'autre,
- des moyens de serrage entre le collier et le siège pour contracter le collier en fonction d'un mouvement de celui-ci dans le siège, les moyens de serrage incluant des profils effilés respectifs (22) sur le collier et/ou sur le siège, qui sont en mesure de contracter le collier afin de bloquer les éléments tubulaires l'un par rapport à l'autre sous l'effet d'un mouvement axial sur le collier jusque dans la position fonctionnelle dans le siège,
- des moyens d'actionnement actifs entre le collier (20), avec interposition d'un élément porte-collier (15) sur lequel est monté le collier, et l'élément tubulaire extérieur afin de déplacer le collier axialement dans le siège entre la position fonctionnelle et la position non fonctionnelle, les moyens d'actionnement comprenant un ressort (17) qui est actif entre le collier élément tubulaire extérieur afin de forcer le collier vers la position fonctionnelle dans laquelle il est placé dans le siège,
**caractérisé en ce que** les moyens d'actionnement comprennent un profil en came (12) entre l'élément porte-collier (15) et l'élément tubulaire extérieur, capable de déplacer le collier axialement par rapport au siège entre la position fonctionnelle et la position non fonctionnelle.

2. Support télescopique réglable selon la revendication 1, dans lequel le profil en came (12) comprend une came circonférentielle formée sur un des élément parmi l'élément porte-collier et l'élément tubulaire externe, et un suiveur de came (16) formé sur l'autre élément parmi l'élément porte-collier élément tubulaire externe, le profil en came et le suiveur de came étant couplés l'un à l'autre.

3. Support télescopique réglable selon la revendication 1 ou 2, dans lequel le siège (8) est formé en évasant l'extrémité correspondante (31) de l'élément tubulaire extérieur.

4. Support télescopique réglable selon la revendication 1 ou 2, dans lequel le siège (8) est prévu sur un premier fourreau (6) monté sur l'élément tubulaire extérieur.

5. Support télescopique réglable selon l'une ou plusieurs des revendications précédentes, dans lequel l'élément porte-collier a la forme d'un second fourreau (15) qui entoure l'extérieur de l'élément tubulaire extérieur.

6. Support télescopique réglable selon la revendication 5, dans lequel le ressort (17) est monté sur l'élément tubulaire extérieur, entre ce dernier et le second fourreau (15).

7. Support télescopique réglable selon l'une ou plusieurs des revendications précédentes, dans lequel le profil en came (12) comprend une came frontale (33) formée à l'extrémité correspondante de l'élément tubulaire extérieur.

8. Support télescopique réglable selon la revendication 7, dans lequel la came frontale est formée sur un élément annulaire (34) monté à l'extrémité axiale correspondante de l'élément tubulaire extérieur.

9. Support télescopique réglable selon la revendication 8, dans lequel des moyens anti-rotation (35, 36) sont prévus entre l'élément tubulaire extérieur et l'élément annulaire monté sur celui-ci.

10. Support télescopique réglable selon l'une ou plusieurs des revendications précédentes, dans lequel la surface interface entre le siège et le collier présente un coefficient de friction qui est inférieur à celui de la surface interface entre le collier et l'élément tubulaire intérieur.

11. Support télescopique réglable selon la revendication 1, dans lequel le profil en came est associé à un élément basculant (75) monté en pivotement transversalement sur l'élément tubulaire extérieur autour d'un axe de pivot (80), l'élément porte-collier (72) comprenant au moins un appendice suiveur de came (73) qui coopère avec le profil en came (81) afin de déplacer le collier à l'encontre de la force du ressort.

12. Support télescopique réglable selon la revendication 11, dans lequel l'élément basculant (75) est monté en pivotement dans des sièges de pivotement respectifs (77) formés sur un fourreau (71) monté sur l'élément tubulaire extérieur, une ouverture (74), à travers laquelle l'appendice suiveur de came se projette radialement vers l'extérieur, étant prévue sur l'un au moins des sièges, et le profil en came étant formé sur l'élément basculant autour de l'axe de pivotement.
